**Europäisches Patentamt**

**European Patent Office**

**Office européen des brevets**

(19)

(11) Veröffentlichungsnummer: **0 286 822 B1**

(12)

# EUROPÄISCHE PATENTSCHRIFT

(45) Veröffentlichungstag der Patentschrift:
**24.07.91 Patentblatt 91/30**

(51) Int. Cl.⁵: **F04D 13/02, H02K 49/10**

(21) Anmeldenummer: **88103474.8**

(22) Anmeldetag: **05.03.88**

(54) **Magnetischer Pumpenantrieb.**

(30) Priorität: **11.04.87 DE 3712459**

(43) Veröffentlichungstag der Anmeldung:
**19.10.88 Patentblatt 88/42**

(45) Bekanntmachung des Hinweises auf die
Patenterteilung:
**24.07.91 Patentblatt 91/30**

(84) Benannte Vertragsstaaten:
**AT BE CH DE ES FR GB IT LI LU NL SE**

(56) Entgegenhaltungen:
**EP-A- 0 279 220**
**DE-A- 3 337 086**
**DE-C- 3 639 720**

(56) Entgegenhaltungen:
**GB-A- 2 145 882**
**SOVIET INVENTIONS ILLUSTRATED, Sektion
Q, Woche C19, 18. Juni 1980, Nr. 34022, Derwent Publications Ltd, London, GB; & SU-
A-684 679 (FEDOROV) 08-09-1979**

(73) Patentinhaber: **Franz Klaus Union Armaturen
Pumpen GmbH & Co.
Blumenfeldstrasse 18
W-4630 Bochum 1 (DE)**

(72) Erfinder: **Klaus, Franz
Dürerstrasse 12
W-4630 Bochum 1 (DE)**

(74) Vertreter: **Patentanwälte Wenzel & Kalkoff
Flasskuhle 6 Postfach 2448
W-5810 Witten (DE)**

## Beschreibung

## Magnetischer Pumpenantrieb

Die Erfindung betrifft einen magnetischen Pumpenantrieb, der aus einem von einem Motor angetriebenen Treiber, aus einem von dem Treiber umfaßten Läufer, mit dem das Pumpenlaufrad verbunden ist, wobei Treiber und Läufer mit sich gegenüberliegenden Magneten besetzt sind, und aus einem feststehenden, aus einem Außenspalttopf und einem Innenspalttopf bestehenden Spalttopf besteht, der den Läufer umschließt, auf seiner Innenseite mit dem Fördermedium der Pumpe in Verbindung steht, gegenüber dem Pumpengehäuse abgedichtet ist und durch den die Kraft der Magnete zur Bewirkung des Antriebes vom Treiber auf den Läufer hindurchgeht, wobei sich der Außentopf und der Innentopf zumindest im Bereich der zylindrischen Mantelfläche berühren und innerhalb der Berührzone ein Wegenetz in die sich berührenden Flächen eingelassen ist.

Derartige Pumpenantriebe sind seit langem bekannt. Sie haben sich insbesondere in der chemischen Industrie und in der Reaktortechnik als zuverlässig und betriebssicher immer dann erwiesen, wenn es darum geht, eine Wellendichtung herkömmlicher Art zu vermeiden. Vielmehr sind als Folge eines derartigen Antriebs lediglich statische Dichtungen vorhanden, die problemlos beherrscht werden und kein Risiko bezüglich eines ungewollten Flüssigkeitsaustritts bergen.

Aus Gründen eines guten Wirkungsgrades müssen die sich gegenüberliegenden, einander anziehenden Magnete des Treibers und des Läufers nahe aneinander gerückt werden, wobei hier Fertigungstoleranzen und vor allen Dingen Sicherheitsüberlegungen eine Rolle spielen. Im Ergebnis ist zwischen den sich gegenüberliegenden Permanentmagneten in der Regel ein Abstand von ca. 4 mm vorhanden, wobei dieser sogenannte Luftspalt von dem zylindrischen Teil des Spalttopfes durchzogen wird. Der Spalttopf ist in der Regel 1 bis 2 mm dick.

Bei Lagerschäden am Treiber und am Läufer sowie bei unvorgesehenem Feststoffbefall des Fördermediums kann es immer wieder vorkommen, daß der Spalttopf beschädigt wird, so daß das bis dahin unter Abdichtung gehaltene Fördermedium ins Freie gelangt. Bisher ist dieser Gefahr dadurch begegnet worden, daß das Antriebsgehäuse mit entsprechenden Meldeeinrichtungen und auch mit einer Abdichtung versehen war, die selbst nach langer Betriebsdauer im Trockenlauf in der Lage war, das bei einer Beschädigung des Spalttopfes andrängende Fördermedium aufzuhalten.

In neuerer Zeit spielen die Wirkungsgrade bei der Übertragung der Motorleistung auf den Läufer einer Pumpe unter Zuhilfenahme einer Permanentmagnetkupplung eine untergeordnete Rolle. Statt dessen wird auf eine größere Sicherheit Wert gelegt, die in erster Linie durch eine Vergrößerung der Wanddicke des Spalttopfes herbeigeführt werden kann. Darüber hinaus sind Vorschläge gemacht worden, den Spalttopf doppelwandig auszubilden (Europäische Patentanmeldung 268013) bzw. zwischen zwei sich berührenden Spalttöpfen ein Wegenetz (Europäische Patentanmeldung 279220) vorzusehen. An den Zwischenraum bzw. an das Wegenetz kann jeweils eine Anzeigevorrichtung angeschlossen sein, mit deren Hilfe eine Druckänderung und damit eine Beschädigung feststellbar ist.

Es ist Aufgabe der Erfindung, einen magnetischen Pumpenantrieb der eingangs genannten Art so zu verbessern, daß bei beibehaltener Sicherheit der Wirkungsgrad des Antriebes nach wie vor gut ist und trotz der Mehrteiligkeit des Spalttopfes eine leicht handhabbare Einheit vorhanden ist, die in derselben Weise montiert werden kann wie bisher.

Zur Lösung dieser Aufgabe schlägt die Erfindung vor, daß der Außentopf unter Vorspannung an dem Innentopf anliegt und der Außentopf und der Innentopf an ihrer offenen Seite miteinander verschweißt sind.

Da sowohl der Außentopf als auch der Innentopf beschädigt werden kann, sollten beide Töpfe so ausgelegt sein, daß sie dem Systemdruck jeweils allein widerstehen, also der eine Topf bei Beschädigung des anderen berstsicher ist. Eine Ausnahme von dieser Regel wird weiter unten noch genauer beschrieben.

Die sich berührenden Zonen zumindest im zylindrischen Mantelteil des Außentopfes und des Innentopfes bewirken zum einen eine gegenseitige Stützung, so daß die Eigenschaften des einteiligen, dickwandigen Spalttopfes weitgehend erreicht werden. Zum anderen hat diese Anordnung den Vorteil, daß das sich dazwischen befindende Wegenetz bei Druckstößen des Fördermediums bzw. bei pulsierenden Drucküberlagerungen keine Volumenveränderung erfährt, da beide Töpfe unter Aufrechterhaltung der Berührung unter irgendwelchen Druckschwankungen gedehnt werden. Auf diese Weise werde Fehlalarme verhindert, die immer dann entstehen können, wenn bei Druckschwankungen einmaliger oder pulsierender Natur der Zwischenraum zwischen beiden Töpfen bezüglich seines Volumens schwankt und so beispielsweise über eine Druckabfragung kontrolliert wird.

Bei gut konstruierten Spalttöpfen weist der Spalttopfboden eine sphärische Krümmung auf, also annähernd die Form eines Kugelabschnittes, wodurch einer möglichen Verformung weitgehend entgegengewirkt wird. Aus diesem Grunde ist es nicht unbedingt erforderlich, daß sich der Außentopf und der Innentopf auch im Bereich des Bodens berühren. Bei einem Druckanstieg innerhalb des Spalttopfes versucht nämlich zunächst die zylindrische Mantelform, sich der Kugelform anzugleichen, da der Spalttopfboden bereits eine annähernd ideale Formgebung besitzt, so daß an dieser Stelle kaum eine Blähverformung eintritt. Selbstverständlich kann auch in diesem Bereich bei der Erfindung eine Berührung in Zonen vorgesehen sein, zwischen denen sich das Wegenetz hindurchzieht.

Auf jeden Fall ist die Doppelschaligkeit auch im Bodenbereich des Spalttopfes besonders wichtig. Dies gilt vor allen Dingen für Spalttöpfe, die auf der Innenseite weder ein Lager noch Stege oder sonstige Einbauten aufweisen. Infolge der Rotation des Läufers sammeln sich nämlich an dieser Stelle leicht Festpartikel an, die dann der Drehung des Läufers weitgehend folgen und so eine dauernde, kreisende Bewegung auf der Innenseite des Spalttopfes ausführen, die über eine längere Betriebsperiode zum Durchscheuern des Bodens führen kann.

Ein besonders wirkungsvolles und statisch günstiges Wegenetz ergibt sich dann, wenn in die Innenseite des Außentopfes eine Wendel eingeprägt ist, die vorzugsweise am offenen Ende des doppelschaligen Spalttopfes in einer Ringkammer mündet. Bei dieser Gestaltung bleibt der Außentopf in weiten Bereichen als dickwandiges Gebilde erhalten, das unter einer Steigung von der Wendel durchzogen ist. Da Beschädigungen insbesondere des Innentopfes vornehmlich als sich vertiefende Riefung auf einer Kreisbahn bilden, besteht bei Verwendung einer Wendel als Wegenetz eine sehr hohe Wahrscheinlichkeit, daß mindestens eine Stelle der Wendel bei einer Beschädigung des Innentopfes erfaßt wird. Das ermöglicht mit Hilfe einer Überwachung des Wegenetzes über eine Druckabfragung oder eine Vakuumabfragung die Auslösung eines sofortigen Alarms. Diese Verhältnisse gelten im übrigen auch für den Außentopf, an dem jedoch Beschädigungen seltener sein dürften.

Aus den geschilderten Gründen eines möglichst integralen doppelschaligen Spalttopfes ist vorgesehen, daß beide Töpfe unter Vorspannung aneinander anliegen. Dazu wird entweder der Außentopf warm auf den Innentopf aufgeschrumpft oder der Innentopf wird mit Hilfe von Unterkühlung in den Außentopf eingelassen. Unabhängig von der Fügung der beiden Töpfe ineinander sind der Außentopf und der Innentopf an der offenen Seite miteinander verschweißt sein, damit eine handhabungsfähige Einheit in Form des doppelschaligen Spalttopfes entsteht.

Die Doppelschaligkeit des Spalttopfes bietet die Möglichkeit, quasi den Spalttopf auszukleiden, also für den Außentopf und den Innentopf unterschiedliche Materialien zu wählen. Dies kann insbesondere für aggressive Fördermedien und dergleichen von Bedeutung sein. Der Außentopf kann dann zum Beispiel aus einem Material geringerer Qualität hergestellt sein, das zwar für eine vorübergehende Zeit dem Fördermedium widersteht, auf Dauer jedoch zu stark angegriffen würde.

Bei extremen Druckbelastungen kann das Ziel, daß beide Töpfe für sich gesehen dem Betriebsdruck widerstehen, zu sehr klobigen und im Wirkungsgrad schlechten Konstruktionen führen. In diesen Ausnahmefällen kann der Außentopf berstfest gestaltet werden, während der Innentopf mehr oder weniger eine Auskleidung ist, die bezüglich der Druckfestigkeit nur einen geringen Sicherheitsbeitrag leistet. Es ist dann zweckmäßig, die Beschädigungsmöglichkeit des Außentopfes weiter herabzusetzen, was in einfacher Weise durch eine Überwachung der Lauftreue des Treibers geschehen kann. Dazu werden zum Beispiel in dem Kupplungsgehäuse im Abstand von 90° zwei Näherungsschalter eingebaut, die auf einen bestimmten Sollwert eingestellt sind. Er bezieht sich auf den Abstand der Außenfläche des Treibers zu den Näherungsschaltern bei normalem Betriebsspiel der Lagerung des Treibers. Falls nun durch eine Lagerbeschädigung oder dergleichen der Treiber an zu taumeln fängt oder beginnt, sich abzusenken, kann die Pumpe über die Meldung der Näherungsschalter stillgesetzt werden. In dieser Weise kann eine Beschädigung des Außentopfes sehr wirksam verhindert werden.

Der in diesen Ausnahmefällen besonders dünne Innentopf kann insbesondere dann einen Beitrag zur Berstsicherheit des zweischaligen Spalttopfes liefert, wenn beide Töpfe im Bereich der Berührzonen miteinander verbunden sind, so daß sich unter Einschluß des Wegenetzes ein statisch hochfestes Gebilde ergibt, das gegenüber Verformungen und damit gegenüber Druckbelastungen besonders immun ist. Die Befestigung kann durch Verkleben, Verlöten oder durch eine Verbindung durch Diffusionsschweißen erfolgen. Diese Art der Verbindung kann im übrigen stets erfolgen, und zwar unabhängig davon, ob der Betriebsdruck von beträchtlicher Höhe ist oder nicht.

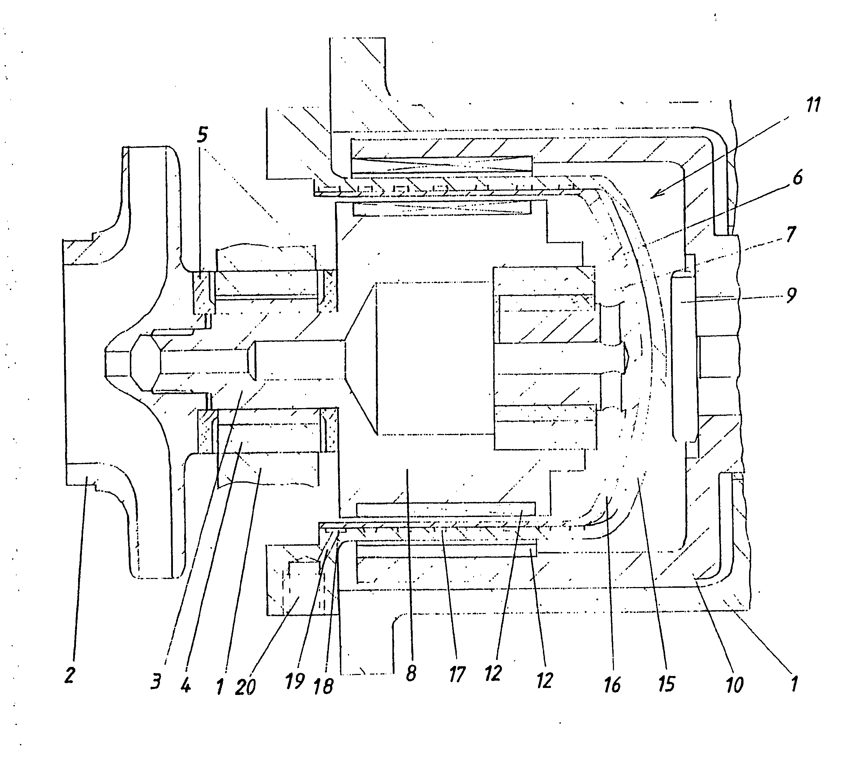

Nachfolgend wird ein Ausführungsbeispiel der Erfindung, das in der Zeichnung dargestellt ist, näher erläutert ; die einzige Figur der Zeichnung zeigt : eine Querschnittsansicht durch einen magnetischen Pumpenantrieb gemäß der Erfindung mit einem doppelschaligen Spalttopf.

Das in der einzigen Figur der Zeichnung wiedergegebene Ausführungsbeispiel zeigt ein Kupplungsgehäuse 1, an dem in der Regel das nicht näher dargestellte Pumpengehäuse mit Hilfe von Zugankern befestigt ist. Innerhalb des Pumpengehäuses rotiert ein Laufrad, das mit Hilfe einer Welle 3 mit einem Innenläufer 8 verbunden ist. Die Welle 3 und der Innenläufer 8 bilden einen integralen Bestandteil. Die Welle ist mit Hilfe eines Axiallagers 4 und mit Hilfe seitlicher Axiallagerscheiben 5 unmittelbar hinter dem Laufrad 2 gelagert, während der Läufer 8 mit Hilfe eines gesonderten Radiallagers geführt ist, das aus einem umlaufenden Lagerring 6 und einem feststehenden Lagerring 7 besteht.

Innerhalb des Kupplungsgehäuses 1 ist ein Treiber 10 drehbar gelagert, der mit Hilfe einer Wellenmutter 9 auf einer nur partiell dargestellten Welle gesichert ist. Der Treiber 10 hat eine glockenförmige Gestalt, und innerhalb der Höhlung befindet sich ein doppelschaliger Spalttopf 11, der wiederum glockenartig den Läufer 8 übergreift. Auf der Außenseite des Läufers 8 sowie auf der Innenseite des Treibers 10 sind Permanentmagnete 12 paarweise angebracht, wobei sich, bezogen auf jeweils den Treiber 10 oder den Läufer 8, die magnetischen Polungen abwechseln. Es liegen sich also ein Südpol des Treibers und ein Nordpol des Läufers, daneben ein Nordpol des Treibers und ein Südpol des Läufers gegenüber usw. Mit Hilfe dieser Permanentmagnete 12 wird die Antriebskraft von einem Elekromotor (nicht dargestellt) über den Treiber 10 auf den Läufer 8 und damit auf das Pumpenrad 2 übertragen.

Der doppelschalige Spalttopf 11 besteht aus einem Außentopf 15 sowie aus einem Innentopf 16, die ineinandergesteckt sind und unter Vorspannung in ihren zylindrischen Bereichen aneinanderliegen. Im Bodenbereich ist ein Abstand zwischen beiden Töpfen 15 und 16 vorhanden, der wenige Zehntelmillimeter beträgt, also geringer ist als in der Darstellung der Figur.

In dem zylindrischen Mantelbereich des Außentopfes 15 sowie des Innentopfes 16 befindet sich eine in die Innenseite des Außentopfes 15 eingeschnittene bzw. eingeprägte Wendel 17, die in einem sammelkammerartigen Ringraum 18 mündet. Sie ist soweit ausgeprägt, daß der Zwischenraum zwischen den beiden Böden der Töpfe 15 und 16 in strömungsleitender Verbindung mit der Wendel 17 steht. Zu dem Ringraum 18 führt eine Bohrung 19, die wiederum Verbindung zu einem Anschluß 20 hat. An diesem Anschluß können eine Leitung, ein Schlauch, ein Manometer, ein Flüssigkeitsfühler oder dergleichen angeschlossen werden, so daß der Innenraum der Wendel 17 sowie des Raumes zwischen den Böden der Töpfe 15 und 16 unter Druck bzw. unter Vakuum gesetzt werden kann. Es ist offensichtlich, daß über diesen Anschluß 20 eine Überwachung der Unversehrtheit beider Töpfe 15 und 16 in der Weise vorgenommen werden kann, daß immer dann ein Alarm ausgelöst wird, wenn die Wendel 17 bzw. der Zwischenraum zwischen den Böden Verbindung mit dem Fördermedium (beschädigter Innentopf 16) bzw. mit der Atmosphäre (beschädigter Außentopf 15) bekommt.

Die Wendel 17 kann annähernd beliebig gestaltet werden, solange eine ausreichende Kontrollfunktion möglich ist. Für eine ausreichend sichere Überwachung reicht eine Tiefe von wenigen Zehntelmillimetern aus, während die Steigung so gewählt werden sollte, daß einerseits eine gute Erfassung aller Flächenbereiche vorhanden ist, andererseits jedoch der Außentopf 15 nicht unnötig geschwächt wird. In dem dargestellten Ausführungsbeispiel sind sowohl der Außentopf 15 als auch der Innentopf 16 in der Lage, den Betriebsdruck der Pumpe allein auszuhalten, so daß bei der Beschädigung des einen der beiden Töpfe keine Berstgefahr besteht.

Statt der Wendel 17 können auch andere Formen zur Durchdringung des Zwischenraumes zwischen beiden Töpfen bzw. zur Abfragung des Zwischenraumes zwischen den Böden verwirklicht werden. Zum Beispiel können Längsriefen gleichmäßig um den Umfang verteilt sein, zwischen denen darüber hinaus in Umfangsrichtung Querverbindungen geschaffen werden können. Es kommt lediglich darauf an, daß der Zwischenraum zwischen den beiden Töpfen im wesentlichen in seiner Gesamtheit erfaßt wird und die Schwächung des doppelschaligen Spalttopfes 11 insgesamt möglichst gering ist.

**Patentansprüche**

1. Magnetischer Pumpenantrieb, bestehend aus einem von einem Motor angetriebenen Treiber (10), aus einem von dem Treiber (10) umfaßten Läufer (8), mit dem das Pumpenlaufrad (2) verbunden ist, wobei Treiber (10) und Läufer (8) mit sich gegenüberliegenden Magneten (12) besetzt sind, und aus einem feststehenden, aus einem Außentopf (15) und einem Innentopf (16) gebildeten Spalttopf, der den Läufer (8) umschließt, auf seiner Innenseite mit dem Fördermedium der Pumpe in Verbindung steht, gegenüber dem Pumpengehäuse (1) abgedichtet ist und durch den die Kraft der Magnete (12) zur Bewirkung des Antriebes von dem Treiber (10) auf den Läufer (8) hindurchgeht, wobei sich der Außentopf (15) und der Innentopf (16) zumindest im Bereich der zylindrischen Mantelfläche berühren und innerhalb der Berührzone ein Wegenetz (17) in die sich berührenden Flächen eingelassen ist, dadurch **gekennzeichnet**, daß der Außentopf (15) unter Vorspannung an dem Innentopf (16) anliegt und der Außentopf (15) und der Innentopf (16) an ihrer offenen Stirnseite miteinander verschweißt sind.

2. Magnetischer Pumpenantrieb nach Anspruch 1, dadurch **gekennzeichnet**, daß das Wegenetz (17) in den Außentopf (15) eingelassen ist.

3. Magnetischer Pumpenantrieb nach Anspruch 1 oder 2, dadurch **gekennzeichnet**, daß das Wegenetz aus einer in den Spalttopf (15, 16) eingeschnittenen Wendel (17) besteht.

4. Magnetischer Pumpenantrieb nach einem der vorhergehenden Ansprüche, dadurch **gekennzeichnet**, daß das Wegenetz (17) in einer Sammelkammer (18) mündet, die über eine Bohrung (19) mit einem von außen zugänglichen Anschluß (20) verbunden ist.

5. Magnetischer Pumpenantrieb nach einem der vorhergehenden Ansprüche, dadurch **gekennzeich-**

net, daß die Vorspannung durch Warmaufschrumpfen des Außentopfes (15) oder durch Kalteinsetzen des Innentopfes (16) aufgebracht ist.

6. Magnetischer Pumpenantrieb nach einem der vorhergehenden Ansprüche, dadurch **gekennzeichnet**, daß der Außentopf (15) mit dem Innentopf (16) im Bereich der sich berührenden Flächen verklebt, verlötet oder durch Diffusionsschweißen miteinander verbunden ist.

7. Magnetischer Pumpenantrieb nach einem der vorhergehenden Ansprüche, dadurch **gekennzeichnet**, daß zur Überwachung der Lauftreue des Treibers (10) in dem Antriebsgehäuse Näherungsschalter untergebracht sind, und daß die Wanddicke des Außentopfes (15) zur alleinigen Beherrschung des Betriebsdruckes ausreicht und die des Innentopfes (16) ohne Rücksicht auf die Festigkeit gestaltet ist.

## Claims

1. Magnetic pump drive comprising a driver (10) driven by a motor, a rotor (8) embraced by the driver (10) and to which is connected the pump impeller (2), the driver (10) and the rotor (8) having opposite magnets (12), as well as a fixed split pot formed by an outer pot (15) and an inner pot (16) and which surrounds the rotor (8), is connected on its inside to the flow medium of the pump, is sealed with respect to the pump casing (1) and through which passes the force of the magnets (12) for obtaining the drive of the driver (10) on the rotor (8), the outer pot (15) and the inner pot (16) being in contact at least in the vicinity of the cylindrical circumferential face and within the contact zone a path network (17) is embedded in the contacting faces, characterized in that the outer pot (15) engages under pretension on the inner pot (16) and the outer pot (15) and the inner pot (16) are welded together on their open front face.

2. Magnetic pump drive according to claim 1, characterized in that the path network (17) is embedded in the outer pot (15).

3. Magnetic pump drive according to claims 1 or 2, characterized in that the path network comprises a helix cut into the split pot (15, 16).

4. Magnetic pump drive according to one of the preceding claims, characterized in that the path network (17) issues into a collecting chamber (18), which is connected by means of a bore (19) to a connection (20) accessible from the outside.

5. Magnetic pump drive according to one of the preceding claims, characterized in that the pretension is applied by the hot shrinking on of the outer pot (15) or the cold insertion of the inner pot (16).

6. Magnetic pump drive according to one of the preceding claims, characterized in that the outer pot (15) is stuck, soldered or connected by diffusion welding to the inner pot (16) in the vicinity of the contacting faces.

7. Magnetic pump drive according to one of the preceding claims, characterized in that the drive casing houses proximity switches for monitoring the true running of the driver (10) and the wall thickness of the outer pot (15) is in itself sufficient for controlling the operating pressure and that of the inner pot (16) is decided without taking account of strength requirements.

## Revendications

1. Entraînement magnétique pour pompe, constitué par un organe d'entraînement (10) actionné par un moteur, par un rotor (8) entouré par l'organe d'entraînement (10), rotor auquel la roue mobile de la pompe (2) est reliée, l'organe d'entraînement (10) et le rotor (8) étant garnis d'aimants (12) situés les uns en face des autres, et par un pot pour fente stationnaire, formé par un pot extérieur (15) et un pot intérieur (16), qui entoure le rotor (8), qui est en relation avec le liquide refoulé de la pompe sur sa face intérieure, qui est étanché par rapport au bâti de la pompe (1) et qui est traversé par la force des aimants (12) pour provoquer l'entraînement de l'organe d'entraînement (10) sur le rotor (8), le pot extérieur (15) et le pot intérieur (16) étant en contact l'un avec l'autre au moins dans la zone de la surface de l'enveloppe cylindrique et un réseau de voies étant encastré dans les surfaces en contact au sein de la zone de contact, **caractérisé en ce** que le pot extérieur (15) adhère au pot intérieur (16) en étant précontraint et que le pot extérieur (15) et le pot intérieur (16) sont soudés l'un à l'autre sur leur face frontale ouverte.

2. Entraînement magnétique pour pompe selon la revendication 1, **caractérisé en ce** que le réseau de voies (17) est encastré dans le pot extérieur (15).

3. Entraînement magnétique pour pompe selon la revendication 1 ou 2, **caractérisé en ce** que le réseau de voies est constitué par une hélice (17) entaillée dans le pot pour fente (15, 16).

4. Entraînement magnétique pour pompe selon l'une des revendications précédentes, **caractérisé en ce** que le réseau de voies (17) aboutit dans un collecteur (8) qui est relié à un raccord (20) accessible de l'extérieur par une forure (19).

5. Entraînement magnétique pour pompe selon l'une des revendications précédentes, **caractérisé en ce** que la précontrainte est appliquée par frettage du pot extérieur (15) ou par insertion à froid du pot intérieur (16).

6. Entraînement magnétique pour pompe selon l'une des revendications précédentes, **caractérisé en ce** que le pot extérieur (15) est collé, brasé ou relié par soudage par diffusion au pot intérieur (16) dans la zone des surfaces en contact.

7. Entraînement magnétique pour pompe selon l'une des revendications précédentes, **caractérisé en ce** que des détecteurs de proximité sont logés dans le bâti de l'entraînement pour contrôler le bon fonctionnement de l'organe d'entraînement (10) et que l'épaisseur de la paroi du pot extérieur (15) suffit pour la seule maîtrise de la pression de service et que celle du pot intérieur (16) est configurée sans tenir compte de la résistance.